(19) Europäisches Patentamt
European Patent Office
Office européen des brevets

(11) EP 2 866 203 B1

(12) EUROPEAN PATENT SPECIFICATION

(45) Date of publication and mention
of the grant of the patent:
**15.04.2020 Bulletin 2020/16**

(51) Int Cl.:
***G06T 11/00*** *(2006.01)*

(21) Application number: **14190175.1**

(22) Date of filing: **23.10.2014**

(54) **X-ray computed tomography apparatus, medical image processing apparatus, and medical image processing method**

Röntgen-Computertomografievorrichtung, Vorrichtung zur Verarbeitung medizinischer Bilder und Verfahren zur Verarbeitung medizinischer Bilder

Appareil de tomographie par ordinateur à rayons X, appareil et procédé de traitement d'image médicale

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2013 US 201314062601**

(43) Date of publication of application:
**29.04.2015 Bulletin 2015/18**

(73) Proprietor: **Toshiba Medical Systems Corporation Otawara-shi, Tochigi-ken 324-8550 (JP)**

(72) Inventors:
• **Zamyatin, Alexander**
**Vernon Hills, Illinois 60061 (US)**
• **Shi, Daxin**
**Vernon Hills, Illinois 60061 (US)**
• **Labno, Thomas**
**Vernon Hills, Illinois 60061 (US)**

(74) Representative: **Moreland, David et al**
**Marks & Clerk LLP**
**Aurora**
**120 Bothwell Street**
**Glasgow G2 7JS (GB)**

(56) References cited:
**US-A1- 2013 101 190**

• **DAXIN SHI ET AL: "Weighted Simultaneous Algebraic Reconstruction Technique", 11TH INTERNATIONAL MEETING ON FULLY 3D IMAGE RECONSTRUCTION IN RADIOLOGY AND NUCLEAR MEDICINE, 11 July 2011 (2011-07-11), pages 160-162, XP055175961, Potsdam, Germany**
• **ZHI YANG ET AL: "Effective Data-domain Noise and Streak Reduction for X-Ray CT", 11TH INTERNATIONAL MEETING ON FULLY 3D IMAGE RECONSTRUCTION IN RADIOLOGY AND NUCLEAR MEDICINE, 11 July 2011 (2011-07-11), pages 290-293, XP055175966, Potsdam, Germany**
• **KOHLER T ET AL: "SNR-weighted ART applied to transmission tomography", 2003 IEEE NUCLEAR SCIENCE SYMPOSIUM CONFERENCE RECORD. / 2003 IEEE NUCLEAR SCIENCE SYMPOSIUM AND MEDICAL IMAGING CONFERENCE. PORTLAND, OR, OCT. 19 - 25, 2003; [IEEE NUCLEAR SCIENCE SYMPOSIUM CONFERENCE RECORD], NEW YORK, NY : IEEE, US, vol. 4, 19 October 2003 (2003-10-19), pages 2739-2742, XP010737608, ISBN: 978-0-7803-8257-2**

**Description**

FIELD

Embodiments described herein relate generally to iterative reconstruction processing in an X-ray computed tomography apparatus, a medical image processing apparatus, and a medical image processing method.

BACKGROUND

X-ray tomographic imaging, in its simplest expression, is imaging concerning an X-ray beam traversing an object and a detector relating to the overall attenuation per X-ray. The attenuation is derived from a comparison between X-rays in the presence of an object and the same X-rays in the absence of the object. According to this conceptual definition, several steps are required to properly construct/reconstruct an image. For example, the finite size of an X-ray generator, the nature and shape of a filter which blocks very low energy X-rays from the X-ray generator, the details of the geometric configuration and characteristics of the detector, and the capacity of a data acquisition system are all elements that influence a method of executing reconstruction.

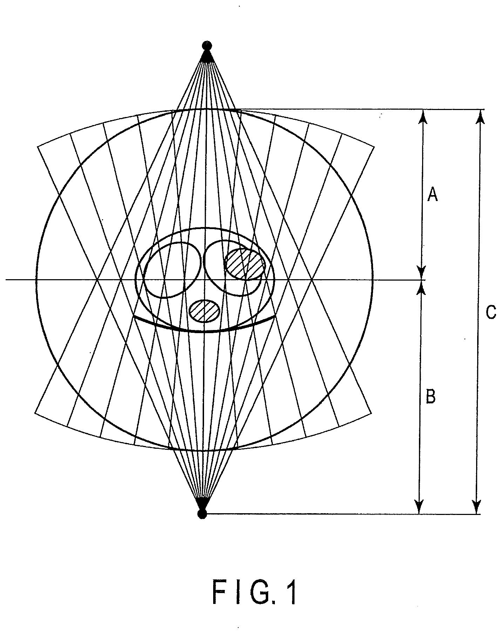

In one of many possible geometric configurations, an X-ray source on top of the graph shown in FIG. 1 is emitting an X-ray beam forming a fan or cone shape traversing the object. While a wide range of values can exist, in general, the distance "C" is about 100 cm, "B" is about 60 cm, and "A" is about 40 cm. In tomography, a group of X-rays covering at least 180° can traverse each point of the object. Therefore, the entire X-ray generator and detector assembly can rotate around a patient. Mathematical considerations show that tomographic conditions are met when a scan of 180° + a fan angle is performed.

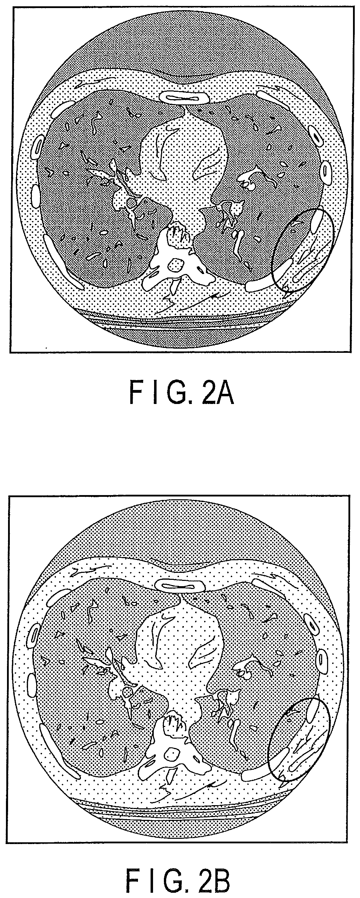

Statistical weighting is an important element in CT iterative reconstruction algorithms. In a conventional system, it is generally believed that a statistical weighting scheme should be the count information recorded by the detector, which is governed by a Poisson stochastic process which directly uses, for example, count information as weights. However, as shown in FIGS. 2A (filtered back-projection) and 2B (iterative reconstruction), due to strong count weighting, reconstructed images suffer from artifacts and have poor image quality.

An article by Shi et al., "Weighted Simultaneous Algebraic Reconstruction Technique", 11TH INTERNATIONAL MEETING ON FULLY 3D IMAGE RECONSTRUCTION IN RADIOLOGY AND NUCLEAR MEDICINE, 11 July 2011, pages 160-162, Potsdam, Germany, discloses a statistically weighted simultaneous algebraic reconstruction technique (wSART) for CT imaging. The wSART algorithm is a generalization of the conventional simultaneous algebraic reconstruction technique (SART) which accounts for the statistical information of the measured projection data.

BRIEF DESCRIPTION OF THE DRAWINGS

FIG. 1 is a view showing an X-ray source which emits an X-ray beam forming a fan or cone shape traversing an object according to a related art.
FIG. 2A is a view showing image artifacts in iterative reconstruction using a filtered back-projection method according to the related art.
FIG. 2B is a view showing image artifacts in iterative reconstruction according to the related art.
FIG. 3 is a schematic view showing a mechanically simplified CT apparatus according to an embodiment.
FIG. 4 is a schematic view showing the mechanically simplified CT apparatus with a detector extending in the direction of the longitudinal axis according to this embodiment.
FIG. 5 is a flowchart of an exemplary CT reconstruction process according to this embodiment.
FIG. 6 is a flowchart of an iterative reconstruction process according to this embodiment.
FIG. 7 is a flowchart showing an example of a process for calculating a statistical weight according to this embodiment.
FIG. 8A is a view showing an example of an image reconstructed using a conventional iterative reconstruction method.
FIG. 8B is a view showing an example of an image reconstructed using an iterative reconstruction method according to this embodiment.
FIG. 9 is a schematic view of an exemplary processing system according to this embodiment.
FIG. 10 is a block diagram showing the arrangement of an X-ray computed tomography apparatus according to this embodiment.

DETAILED DESCRIPTION

In general, according to the invention an X-ray computed tomography apparatus according to claim 1 is provided.

In one embodiment, the calculating step includes calculating variance data as

$$v = \frac{m + \sigma_e}{m \times m}$$

where m is mean count data and $\sigma_e$ is an electronic noise variance.

In one embodiment, the transforming step includes (1) applying a low-pass filter to the variance data, and (2) applying a range-compressing function to the variance data to obtain statistical weight data. In some embodiments, the range-compressing function is a logarithmic function or a square-root function.

In one embodiment, the transforming step includes (1) applying a threshold function to the variance data to obtain threshold data, and (2) applying a low-pass filter to the threshold data to obtain statistical weight data. In one embodiment, the threshold function transforms input values to an output range between first and second predetermined values.

In another embodiment, the transforming step includes (1) applying a threshold function to the variance data to obtain threshold data, (2) applying a low-pass filter to the threshold data to obtain filtered threshold data, and (3) applying a range-compressing function to the filtered threshold data to obtain statistical weight data. In one embodiment, the second threshold function transforms input values to an output range less than a predetermined threshold value.

In another embodiment, the obtaining step includes obtaining detector count data from projection data.

Various methods, systems, devices, and computer-readable media are put into practice in accordance with this disclosure.

In the accompanying drawings, like reference numerals denote identical or corresponding parts throughout the several drawings. In addition, the terms "a", "an", and the like generally has a meaning of "one or more" unless otherwise stated.

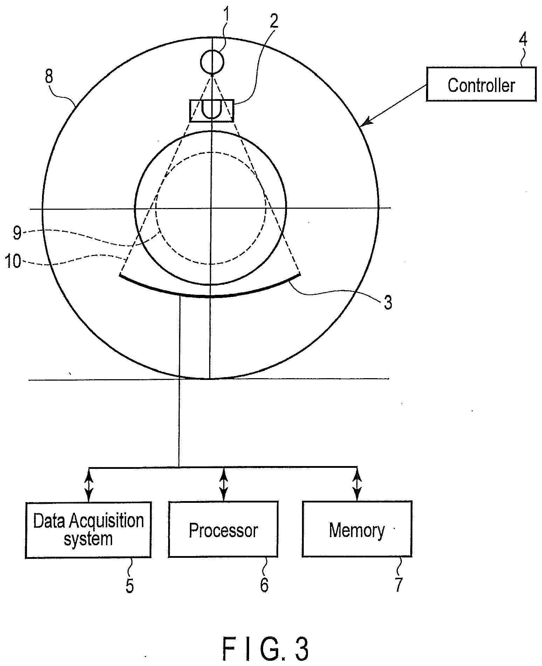

FIG. 3 shows a simplified schematic structure of a CT apparatus which can include a detector array for detecting photons. The aspects of this disclosure are not limited to a CT apparatus as a medical imaging system. In particular, the structures and procedures described in this specification can be applied to other medical imaging systems. In addition, the specific descriptions provided in the specification concerning a CT apparatus and the detection of photons should be considered as exemplary.

A detector array, a photon detector and/or a photon detector array is sometimes simply referred to as a detector in this specification. The CT apparatus shown in FIG. 3 includes an X-ray tube 1, a filter/collimator 2, and a detector 3. The CT apparatus also includes additional mechanical and electrical components such as a gantry motor and a controller 4 which controls the rotation of a rotating frame (to be described later), the X-ray source, and a patient bed. The CT apparatus also includes a data acquisition system 5 and a processor 6 which generates CT images based on the projection data acquired by the data acquisition system 5. The processor 6 and the data acquisition system 5 may use a memory 7 configured to store, for example, data obtained from the detector and reconstructed images.

The X-ray tube 1, the filter/collimator 2, the detector 3, and the controller 4 can be provided in a frame 8 having a bore. The frame 8 has an almost cylindrical or donut shape. In the view shown in FIG. 3, the longitudinal axis of the bore of the frame 8 is in the center of the bore, and extends into and output of the page. That is, the longitudinal axis of the bore of the frame 8 is almost parallel to the rotation axis of the rotating frame (to be described later) and the long-axis direction of the top. The interior of the bore specified as an area 9 (imaging field of view) is a target area for imaging. An object to be scanned, such as a patient, is placed in the target area having, for example, a patient table. At this time, the X-ray tube 1 irradiates the object with radiation 10 in a fan or cone shape. In general, the radiation 10 in a fan or cone shape substantially or effectively traverses a cross-section of the object with respect to the longitudinal axis. The data acquisition system 5 captures the intensity of X-ray photons entering the detector 3. The data acquisition system 5 transmits the captured intensity to the processor 6. The data acquisition system 5, the processor 6, and the memory 7 may be implemented as a single machine or computer, or as a plurality of separate machines or computers. The plurality of separate machines or computers are coupled to each other via a network or other data communication systems. The controller 4 may also be coupled via the network or other data communication systems. The controller 4 may be implemented as a separate machine or computer, or as part of another machine of a system or another computer of the system.

Referring to FIG. 3, the detector 3 is a rotating detector array which rotates together with the X-ray tube 1 with respect to the longitudinal axis. As will be described later, although not shown in FIG. 3, a stationary detector array may also be included. For example, both a rotating detector array and a stationary detector array are provided in the frame 8. Other detectors may be implemented.

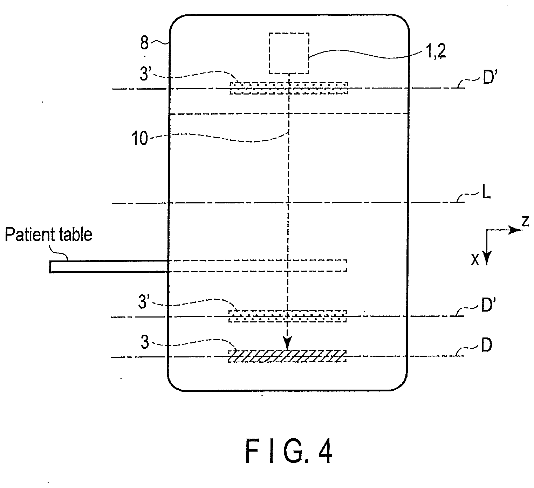

FIG. 4 is a schematic diagram of a mechanically simplified CT apparatus with a detector 3 extending in a direction of a longitudinal axis. FIG. 4 is a side view of the CT apparatus shown in FIG. 3. The side view shows both the rotating detector array and the stationary detector array in the frame 8. In particular, FIG. 3 is a view of a CT apparatus from the perspective of a longitudinal axis L. In this case, this axis extends into and out of the page. That is, FIG. 3 is a sectional view of the gantry when viewed from a direction along the longitudinal axis L. Referring to FIG. 4, the longitudinal axis L laterally extends across the page.

FIG. 4 shows the rotating detector 3 having a detector axis D laterally extending across the page. As shown in FIG. 4, in general, D is substantially or effectively parallel to L. That is, the relationship between these two axes is parallel within the range of angle differences of 2°, 1°, or less. According to the various aspects described in this specification, a perfect geometrically "parallel" or "perpendicular" relationship is not generally necessary, and a "general, substantial, or effective" relationship is suitable within the range of angle differences of 2°, 1°, or less.

The rotating detector 3 can rotate together with the X-ray tube 1 about the longitudinal axis L. A series of stationary detector arrays 3' may be provided in a periodic or irregular fashion around the frame 8. The series of stationary detector arrays 3' may form a circular shape when viewed along the longitudinal axis L.

The series of stationary detector arrays 3' can be provided along respective detector axes D', which laterally extend across the page. As shown in FIG. 4, in general, D' is substantially or effectively parallel to L and D. That is, the relationship between these axes L and D is parallel within the range of angle differences of 2°, 1°, or less. According to the various aspects described in this specification, a perfect geometrically "parallel" or "perpendicular" relationship is not generally necessary, and a "general, substantial, or effective" relationship is suitable within the range of angle differences of 2°, 1°, or less.

FIG. 4 also shows a patient table extending into the bore of the frame 8 and the radiation 10 in a fan or cone shape. The radiation 10 in a fan or cone shape has a long length of lateral dimensions from the viewpoint of FIG. 3, and a shorter length of the lateral dimensions from the viewpoint of FIG. 4. In exemplary implementations, the radiation 10 in a fan or cone shape can impinge upon both one of the detector arrays 3' and the detector array 3. Furthermore, FIG. 4 shows the detector array 3 and the detector arrays 3' as having a common dimensional length in the z direction. In other embodiments, the detector array 3 and the detector arrays 3' or the detector arrays 3' may have different lengths in the z direction.

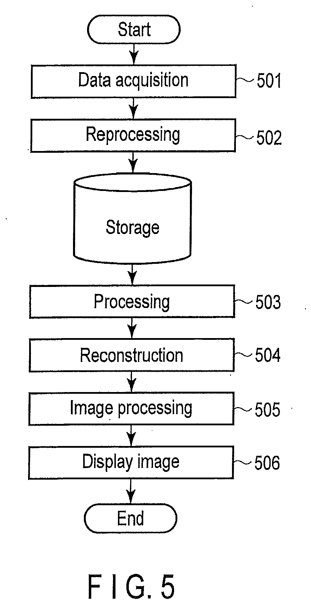

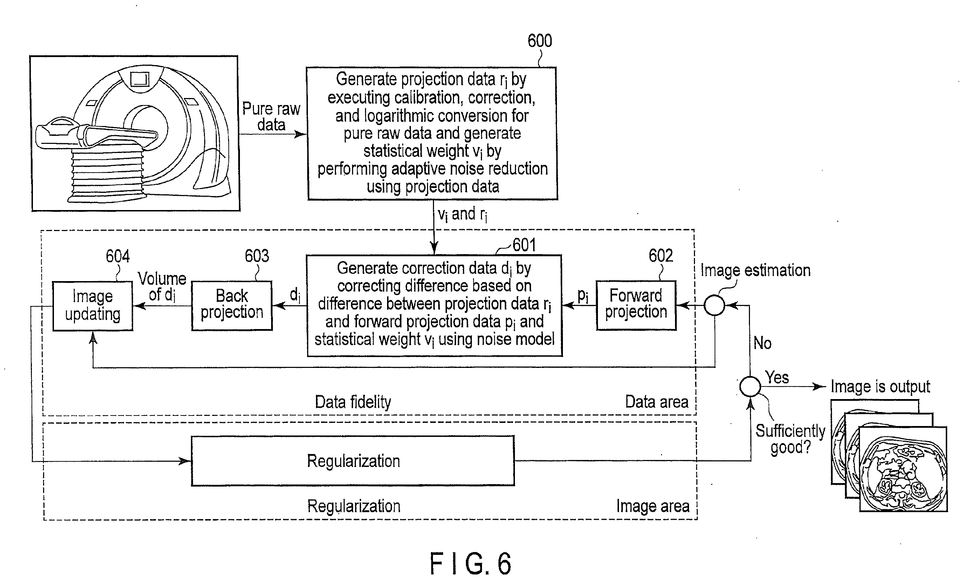

FIG. 5 shows the basic steps in CT image reconstruction, including data acquisition step 501, preprocessing step 502, processing step 503, reconstruction step 504, image processing step 505, and image display step 506. The data acquisition 501 includes obtaining data from the detectors in a stationary domain. Preprocessing step 502 includes data decoding, offset correction, normalization, calibration, and logarithmic conversion. The preprocessed data is stored in the memory 7 before processing step 503. Processing step 503 can include defective channel correction, scattering correction, and adaptive noise reduction. Other calibrations and corrections for the data may be executed in preprocessing step 502 and processing step 503 shown in FIG. 5. In addition, the execution order of specific steps may be changed. In addition, some of the steps described above may be optional. The projection data output from processing step 503 is used in reconstruction step 504 also shown in FIG. 6. The images output in reconstruction step 504 may be further processed in image processing step 505 and displayed in step 506.

Aspects of this disclosure relate to a novel method of transforming count information so as to modify weight coefficients used in iterative reconstruction, i.e., step 504. Based on this transformation, artifacts originating from inaccurate count information are reduced in the final reconstructed image.

Some new types of detectors, i.e., photon counting detectors, directly capture photon count information. In this case, count information is directly provided by the detector. The data acquisition system 5 transmits the count information to the processor 6. Photon count data statistics are known to be closely described by the Poisson distribution. A detector of a more general type in diagnostic CT is an energy-integrating detector, which captures the measured intensity of an incident X-ray beam. The measured intensity is the sum of energies of all photons striking the detector element during a measurement period. That is, the signal is proportional to the photon count weighted by photon energies. During data acquisition, the signal is discretized, and a discrete value of the measurement value is sent to the processor 6. For the sake of simplicity, this discrete signal is called a "count". The discrete signal is known to follow a compound Poisson distribution. In this case, the input signal is called "count" regardless of whether it was obtained by a photon-counting detector or energy-integrating detector.

FIG. 6 shows a data flow in an example of an iterative reconstruction process. In an element 601, a difference $d_i$ is obtained as $d_i = (r_i - p_i)/v_i$ for each i = (view, row, column) combination of projection data. In this case, $r_i$ is the projection data obtained from the processing performed in an element 600, $p_i$ is obtained from a system model (forward-projection 602), and $v_i$ is a statistical weight obtained from a noise model. Reconstruction, e.g., back-projection, is executed in an element 603. In an element 604, the image is updated based on previous image estimation. This process continues during a preset number of iterations or until a stopping criterion based on image quality is met.

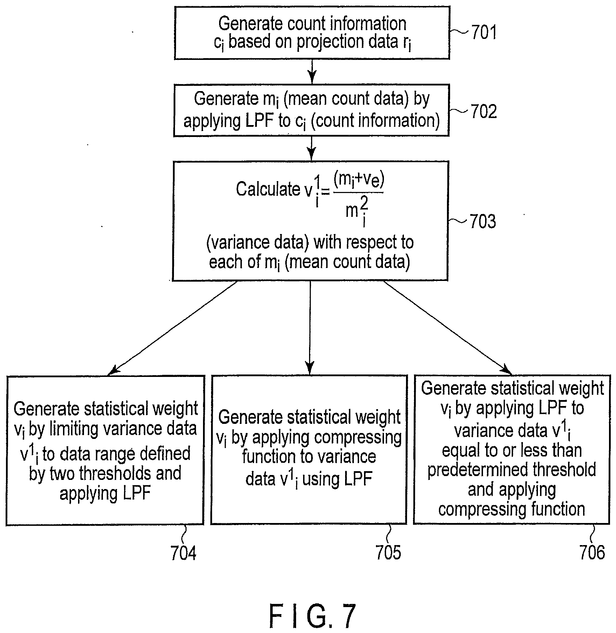

The respective statistical weights $v_i$ are obtained in a plurality of steps. A novel noise model executes these steps. FIG. 7 shows these steps.

In step 701, count information $c_i$ is obtained from projection data $r_i$. This processing includes, for example, reversing the logarithmic processing step and the calibration processing step. That is, step 701 includes $c_i = \exp(R_i - C_i - r_i)$, where $R_i$ is a reference (normalization) value, and $C_i$ is a calibration value. $R_i$ represents, for example, the dose of X-rays entering the detector 3. When storing the count information $c_i$ after processing step 502 shown in FIG. 5, it is not necessary to perform back calculation in this step.

In step 702, a low pass-filter is applied to the count information to obtain mi (means count data). A 3 x 3 window or 5 x 7 window (or a combination of them) is used in this step. Other size windows and various boundary conditions may be used to execute filtering.

In step 703, a variance $v^1_i$ is calculated from $m_i$

$$v^1_i = \frac{m_i + \sigma_e}{m_i^2}$$

where $\sigma_e$ is the electronic noise variance assuming a Gaussian noise distribution. Note that $\sigma_e$ may have photon noise in addition to an electronic noise variance (circuit noise variance). Photon noise is, for example, noise depending on an X-ray photon count.

After step 703, $v_i$ can be calculated by several different methods from $v^1_i$. As shown in FIG. 7, one of steps 704, 705, and 706 is performed following step 703.

For example, in step 704, a low-threshold function is applied to $v^1_i$ and then a low-pass filter (e.g., 5 x 7) is applied to obtain $v_i$. A plurality of limits on the low-threshold function are, in a given embodiment, 0.1 and 1000. For example, values of $v^1_i$ below 0.1 are set to 0.1, while values of $v^1_i$ above 1000 are set to 1000. Other thresholds can also be set. For example, the second threshold may change between 100 and 10000.

Alternatively, in step 705, a low-pass filter is applied to $v^1_i$, and then a range-compressing function is applied to the result. Preferred examples of range-compressing functions to be applied include a logarithmic function and a square-root function.

Alternatively, in step 706, after a high threshold is applied to $v^1_i$ and a low-pass filter is applied, a range-compressing function (e.g., a logarithmic or square-root function) may be applied. One limit on the high-threshold function is, in one embodiment, between 1000 and 10000. For example, values of $v^1_i$ above the threshold value are set to the threshold value. Other threshold values can be assumed.

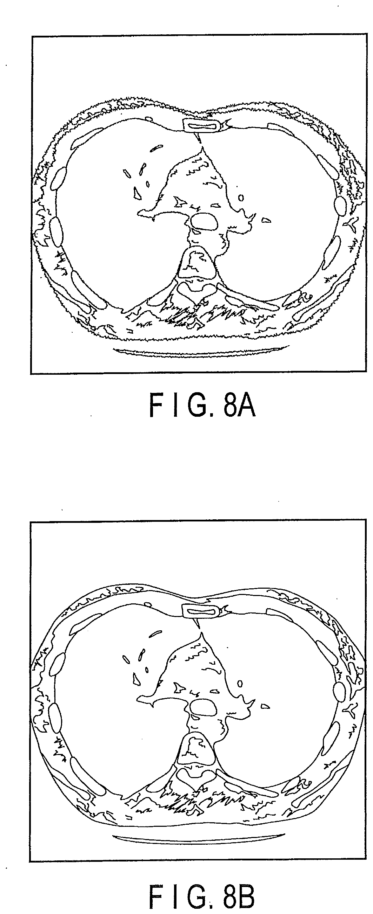

FIGS. 8A and 8B show result examples of the novel method disclosed in this specification. FIG. 8A shows a reconstructed image obtained using a conventional iterative reconstruction algorithm. In contrast, FIG. 8B shows a reconstructed image obtained using one of the reconstruction algorithms described above. In this case, image artifacts in FIG. 8B according to this embodiment are reduced as compared with those in FIG. 8A according to the related art.

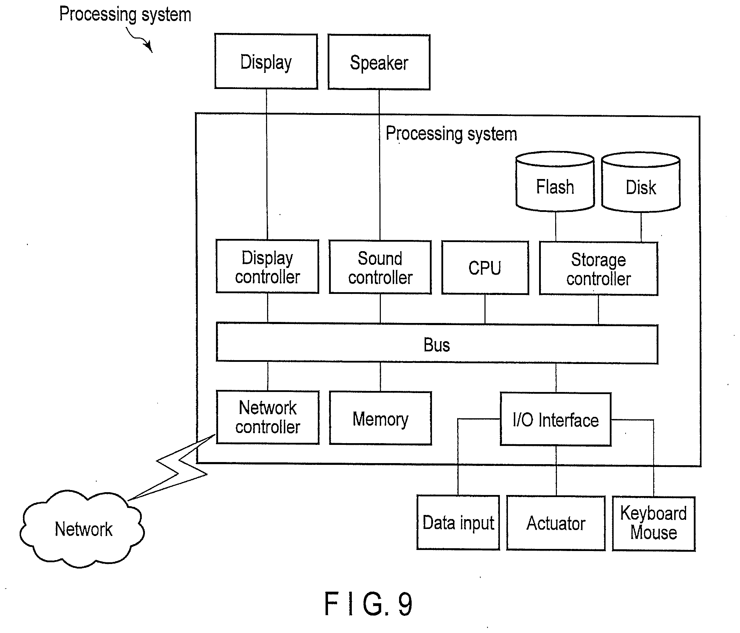

FIG. 9 shows an exemplary processing system in association with the structure shown in FIG. 3. This exemplary processing system can be implemented using one or more microprocessors or the equivalents, such as a CPU (Central Processing Unit) and/or at least one ASP (Application Specific Processor). The microprocessor is a hardware circuit which uses a computer-readable storage medium, such as a memory circuit (e.g., a ROM, EPROM, EEPROM, flash memory, static memory, DRAM, SDRAM, and their equivalents), configured to control the microprocessor to execute and/or control the processes and systems of this disclosure. Other storage media can be controlled via a controller, such as a disk controller which can control a hard disk drive or optical disk drive.

The microprocessor or its aspects, in alternative implementations, can include or exclusively include a logic device for augmenting or fully implementing this disclosure. Such a logic device includes, but is not limited to, an ASIC (Application-Specification Integrated Circuit), an FPGA (Field Programmable Gate Array), a GAL (Generic-Array of Logic), and their equivalents. The microprocessor may be a separate device or a single processing mechanism. Furthermore, this disclosure can benefit from the parallel processing capabilities of a multi-core CPU and a GPU (Graphics Processing Unit) to improve computational efficiency. One or more processors in a multi-processing arrangement may also be used to execute a series of instructions contained in the memory. Alternatively, hard-wired circuit may be used in place of or in combination with software instructions. Therefore, the exemplary implementations discussed in the specification are not limited to any specific combination of hardware circuits and software.

In another aspect, the results of processing in accordance with this disclosure can be displayed on a monitor via a display controller. The display controller preferably includes at least one graphic processing unit, which can be provided by a plurality of graphics processing cores, to improve computational efficiency. In addition, an I/O (input/output) interface is provided to input signals and/or data from a microphone, speaker, camera, mouse, keyboard, touch display or pad interface, and the like, which can be connected to the I/O interface as peripherals. For example, a keyboard or a pointing device for controlling parameters of various processes or algorithm parameters in this disclosure can be connected to the I/O interface to provide additional functions and configuration options or control display characteristics. Moreover, the monitor can be provided with a touch-sensitive interface for providing a command/instruction interface.

The above constituent elements can be coupled to a network, such as the Internet or a local internet, via a network interface for the transmission or reception of data including controllable parameters. A central BUS is provided to connect the above hardware components to each other and provides at least one path for digital communication between the hardware components.

The data acquisition system 5, the processor 6, and the memory 7 in FIG. 3 can be implemented using one or more processing systems in accordance with the exemplary implementation shown in FIG. 9. In particular, one or more circuits or computer hardware units coinciding with one or more devices shown in FIG. 9 can provide the functions of the data acquisition system 5, the processor 6, and the memory 7. The functional processing described in this specification can also be implemented in one or more special circuits including circuits for executing the above processing. Such circuits can be a part of a computer processing system or a discrete device which is interconnected to other systems. A processor in accordance with this disclosure can also be programmed to or configured to execute the functional processing described in the specification by computer code elements.

In addition, the processing systems, in one implementation, can be connected to each other via a network or other data communication connections. One or more processing systems can be connected to corresponding actuators to actuate and control movement of the gantry, the X-ray tube, and/or the patient bed.

Software suitable for the computer-readable medium of a processing system including a memory and a storage device can be tangibly stored. Other examples of computer-readable media are compact discs, hard disks, floppy disks, tapes, magneto-optical disks, PROMs (EPROMs, EEPROMs, and flash EPROMs), DRAMs, SRAMs, SDRAMs, or any other magnetic media, compact discs (e.g., CD-ROMs), or any other media from which a computer can read. The software may include, but is not limited to, device drivers, operating systems, development tools, applications software, and/or graphical user interfaces.

Computer code elements of the above media may be any interpretable or executable code mechanisms including, but not limited to, scripts, interpretable programs, DLL (Dynamic Link Libraries), Java classes, and complete executable programs. Furthermore, parts of processing according to aspects of this disclosure may be distributed for better performance, reliability and/or cost.

The data input portion of the processing system accepts input signals from a detector or a detector array via, for example, the respective wired connections. A plurality of ASICs or other data processing components can be provided so as to form a data input portion or provide inputs to the data input portion. The ASICs can respectively receive signals from discrete detector arrays or segments (discrete portions) thereof. When an output signal from a detector is an analog signal, a filter circuit can be provided, together with an analog/digital converter for data recording and processing uses. Filter processing can also be performed by digital filtering without any discrete filter circuit for an analog signal. Alternatively, when the detector outputs a digital signal, digital filtering and/or data processing can be performed directly from the output of the detector.

While certain implementations have been described, these implementations have been presented as a mere example, and are not intended to limit the scope of this disclosure. The novel devices, systems, and methods described in this specification may be embodied in a variety of other forms. In addition, various omissions, substitutions, and changes in the implementations of the devices, systems, and methods described in the specification may be made without departing from the scope of the invention as defined by the appended claims.

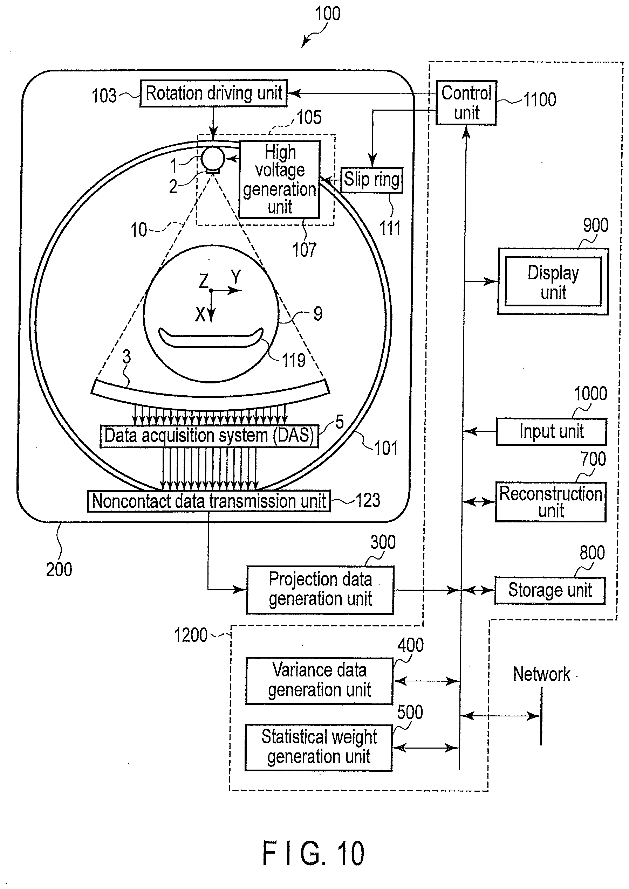

An embodiment of this X-ray computed tomography apparatus (to be referred to as an X-ray CT apparatus hereinafter) will be described in more detail below with reference to FIG. 10. FIG. 10 is a block diagram showing the arrangement of an X-ray computed tomography apparatus according to this embodiment. Note that the same reference numerals in the following description denote constituent elements having almost the same functions and arrangements, and a repetitive description will be made only when required.

Note that X-ray computer tomography apparatuses include a rotate/rotate-type apparatus in which an X-ray tube and an X-ray detector rotate together around an object, and a stationary/rotate-type apparatus in which many X-ray detection elements are arrayed in the form of a ring, and only an X-ray tube rotates around an object. Either type can be applied to this embodiment.

As mechanisms of converting incident X-rays into electric charges, the following techniques are the mainstream: an indirect conversion type that converts X-rays into light through a phosphor such as a scintillator and converts the light into electric charges through photoelectric conversion elements such as photodiodes, and a direct conversion type that uses generation of electron-hole pairs in a semiconductor such as selenium by X-rays and migration of the electron-hole pairs to an electrode, i.e., a photoconductive phenomenon. As an X-ray detection element, either of these schemes can be used.

Alternatively, an X-ray detection element may be a double-layer detection element including a front-surface detection portion which detects low-energy X-rays and a back-surface detection portion which is provided on the back surface of the front-surface detector and detects high-energy X-rays. In this case, for the sake of simplicity, an X-ray detector to be used is a single-layer X-ray detection element. Note that an X-ray detection element to be used may be a photon energy integrating detector or photon counting detector.

Recently, with advances toward the commercialization of a so-called multi-tube type X-ray computed tomography apparatus having a plurality of pairs of X-ray tubes and X-ray detectors mounted on a rotating frame, related techniques have been developed. This embodiment can be applied to both a conventional single-tube type X-ray computed tomography apparatus and a multi-tube type X-ray computed tomography apparatus. When using a multi-tube type, different tube voltages are to be applied to a plurality of tubes (multi-tube scheme). The single-tube type X-ray computed tomography apparatus will be exemplified here.

An X-ray computed tomography apparatus 100 includes a gantry 200, a bed (not shown), a projection data generation unit 300, a variance data generation unit 400, a statistical weight generation unit 500, a reconstruction unit 700, a storage unit 800, a display unit 900, an input unit 1000, and a control unit 1100 (the controller 4 in FIG. 3). Note that the X-ray computed tomography apparatus 100 may include an interface (to be referred to as an I/F hereinafter) (not shown). The I/F connects the X-ray computed tomography apparatus 100 to an electronic communication line (to be referred to as a network hereinafter). A radiology department information management system, a hospital information system, other medical image diagnostic apparatuses, and the like are connected to the network.

The gantry 200 accommodates a rotating support mechanism (not shown). The rotating support mechanism includes a rotating frame 101, a frame support mechanism (corresponding to the frame 8 in FIG. 3) which supports the rotating frame 101 so as to make it rotatable about a rotation axis Z, and a rotation driving unit (electric motor) 103 which drives the rotation of the rotating frame 101.

The rotating frame 101 is equipped with an X-ray generation unit 105, an X-ray detector (corresponding to the detector 3 in FIG. 3) 3 which is also called a two-dimensional array type or multi-array type detector, a data acquisition system (to be referred to as a DAS hereinafter; corresponding to the data acquisition system 5 in FIG. 3), a noncontact data transmission unit 123, a cooling apparatus (not shown), a gantry control apparatus (not shown), and the like. The X-ray generation unit 105 generates X-rays. The X-ray generation unit 105 includes a high voltage generation unit 107, an X-ray tube 1, and a collimator unit 2 (corresponding to the collimator in FIG. 3).

The high voltage generation unit 107 generates a tube voltage to be applied to the X-ray tube 1 and a tube current to be supplied to the X-ray tube 1 by using the power supplied via a slip ring 111 under the control of the control unit (corresponding to the processor 6 in FIG. 3 and the CPU in FIG. 9) 1100 (to be described later).

The X-ray tube 1 emits X-rays from an X-ray focus upon receiving a tube voltage and a tube current from the high voltage generation unit 107.

The collimator unit 2 is attached to the X-ray radiation window on the front surface of the X-ray tube 1. The collimator unit 2 includes a plurality of collimator plates. The plurality of collimator plates shape X-rays emerging from the X-ray focus into, for example, a cone beam shape (pyramidal shape). More specifically, the control unit 1100 drives the plurality of collimator plates to obtain a cone angle for obtaining actually measured projection data having a preset slice thickness. In addition, of the plurality of collimator plates, at least two collimator plates (to be referred to as a cone angle collimator hereinafter) have an aperture width associated with a cone angle, which is independently driven under the control of the control unit 1100.

An X-ray radiation range is indicated by a dotted line 10 in FIG. 3 and a dotted line 10 in FIG. 10. The X-axis is a straight line which is perpendicular to the rotation axis Z and extends downward in the vertical direction. The Y-axis is a straight line which is perpendicular to the X-axis and the rotation axis Z.

The X-ray detection unit 3 (the detector in FIG. 3) detects the X-rays transmitted through the object. The X-ray detection unit 3 is mounted at a position and angle at which it faces the X-ray tube 1 through the rotation axis Z. The X-ray detection unit 3 includes a plurality of X-ray detection elements. Assume that in the following description, a single X-ray detection element forms a single channel. A plurality of channels are two-dimensionally arrayed in two directions, i.e., the slice direction and the arc direction (channel direction) which is perpendicular to the rotation axis Z and whose radius corresponds to the distance from an X-ray focus, as a center, from which X-rays emerge, to the center of the light-receiving portion of an X-ray detection element corresponding to one channel. The two-dimensional array is formed by arranging a plurality of channels, one-dimensionally arrayed along the channel direction, in a plurality of columns arranged in the slice direction.

The X-ray detection unit 3 having such two-dimensional array of X-ray detection elements may be formed by arranging a plurality of modules, one-dimensionally arrayed in a nearly arc direction, in a plurality of columns in the slice direction. In addition, the X-ray detection unit 3 may be constituted by a plurality of modules each having a plurality of X-ray detection elements arrayed in one column. In this case, the respective modules are one-dimensionally arrayed in the nearly arc direction along the above channel direction. The number of X-ray detection elements arranged in the slice detection will be referred to as the number of columns hereinafter.

The bed (not shown) includes a top 119 and a driving unit (not shown) which drives the top 119. The driving unit vertically moves the bed in accordance with an instruction input by the operator.

When performing X-ray CT scan on an object, the object is placed on the top (corresponding to the patient table in FIG. 4) 119. The top 119 on which the object is placed is inserted from the front surface side of the gantry 200 (the side where the bed is arranged with respect to the gantry 200) into a cylindrical imaging area between the X-ray tube 1 and the X-ray detection unit 3.

A data acquisition system (to be referred to as a DAS hereinafter; the data acquisition system in FIG. 3) 5 is connected to the output side of the X-ray detection unit 3. The DAS 5 is attached, for each channel, with an I-V converter which converts a current signal from each channel of the X-ray detection unit 3 into a voltage, an integrator which periodically integrates this voltage signal in synchronism with an exposure period of X-rays, an amplifier which amplifies an output signal from the integrator, and an analog/digital converter which converts an output signal from the amplifier into a digital signal. The DAS 5 changes the integration interval of the integrator in accordance with a scan under the control of the control unit 1100. The data (pure raw data) output from the DAS 5 is transmitted to the projection data generation unit 300 via the noncontact data transmission unit 123 using magnetic transmission/reception or optical transmission/reception.

The projection data generation unit 300 generates projection data based on an output from the X-ray detection unit 3. More specifically, the projection data generation unit 300 performs preprocessing for the pure raw data output from the DAS 5. Preprocessing includes, for example, sensitivity nonuniformity correction processing between channels and the processing of correcting an extreme decrease in signal intensity or signal-dropout due to an X-ray absorber, mainly a metal portion. The data (called raw data or projection data; projection data in this case) output from the projection data generation unit 300 immediately before reconstruction processing is stored in a storage unit (the memory 7 in FIG. 3 and the memory in FIG. 9) 800 including a magnetic disk, magneto-optical disk, or semiconductor memory in association with view angles at the time of data acquisition.

The projection data generation unit 300 generates a set of projection data acquired at nearly the same time with one shot at the same interpolated view angle throughout a plurality of channels defined by a cone angle. View angles are represented by angles in the range of 0° to 360° which represent the respective positions on a circular orbit centered on the rotation axis Z, about which the X-ray tube 1 revolves, with the angle of the uppermost portion on the circular orbit in an upward vertical direction from the rotation axis Z being 0°. Note that projection data which corresponds to each channel is identified by a view angle, cone angle, and channel number. A view angle, cone angle, and channel number correspond to (view, row, column) of i = projection data described above.

The projection data generation unit 300 generates count information $c_i$ (original data) based on projection data $r_i$. The count information $c_i$ corresponds to, for example, the data output from the X-ray detection unit 3. Note that when the data output from the X-ray detection unit 3 is stored in the storage unit 800, the projection data generation unit 300 need not generate the count information $c_i$. When the X-ray detection unit 3 is a photon counting detector, the count information $c_i$ is, for example, count data indicating an X-ray photon count. The projection data generation unit 300 outputs the generated count information $c_i$ to the variance data generation unit 400.

The variance data generation unit 400 generates variance data $v^1_i$ based on the projection data and noise data $\sigma_e$ concerning predetermined noise. More specifically, the variance data generation unit 400 generates mean count data $m_i$ by applying predetermined filtering processing to the count information $c_i$. The predetermined filtering processing is, for example, filtering processing using a low-pass filter. The window of this low-pass filter is, for example, a 3 x 3 window or 5 x 7 window (or a combination of them). Applying the low-pass filter will reduce noise corresponding to high-frequency components of the count information $c_i$. Note that windows with different sizes and various boundary conditions may be used to execute filtering.

More specifically, the variance data generation unit 400 generates the variance data $v^1_i$ by using

$$v^1_i = \frac{m_i + \sigma_e}{m_i^2}$$

In this case, noise data $\sigma_e$ is, for example, variance data concerning electronic noise concerning the X-ray detection unit 3, the DAS 5, and the like and photon noise concerning the X-rays generated by the X-ray tube 1. The variance data generation unit 400 outputs the gen-erated variance data $v^1_i$ to the statistical weight generation unit 500. That is, the variance data generation unit 400 generates the variance data $v^1_i$ by dividing the sum of the filtering data $m_i$ obtained by filtering the original data $c_i$ and the noise data $\sigma_e$ by the square of the filtering data $m_i$.

The statistical weight generation unit 500 generates a statistical weight $v_i$ by compressing the variance data $v^1_i$ to a predetermined data range (compressing the dynamic range of the variance data). More specifically, the statistical weight generation unit 500 reads out a predetermined data range from the storage unit 800. The statistical weight generation unit 500 replaces each value, of the variance data $v^1_i$, which exceeds the upper limit value of the predetermined data range with the upper limit value. In addition, the statistical weight generation unit 500 replaces each value, of the variance data $v^1_i$, which exceeds the lower limit value of the predetermined data range with the lower limit value. With these replacements, the statistical weight generation unit 500 generates the statistical weight $v_i$ by compressing the variance data $v^1_i$ to the predetermined data range. The statistical weight generation unit 500 outputs the generated statistical weight to the reconstruction unit 700.

The upper limit value is, for example, 1000. The lower limit value is, for example, 0.1. Note that the operator may set a predetermined range via the input unit 1000 as needed. For example, the upper limit value may be changed between 100 and 10000, as needed. The variance data $v^1_i$ may be compressed to a predetermined data range by a threshold function or threshold processing.

Note that the statistical weight generation unit 500 may also generate the statistical weight $v_i$ in the following manner. The statistical weight generation unit 500 applies a low-pass filter to the variance data $v^1_i$. Applying the low-pass filter to the variance data $v^1_i$ will reduce noise corresponding to high-frequency components of the variance data $v^1_i$. The statistical weight generation unit 500 then generates the statistical weight $v_i$ by compressing the variance data output from the low-pass filter by using a predetermined compressing function (range-compressing function). The predetermined compressing function is, for example, a logarithmic function or a square-root function.

In addition, the statistical weight generation unit 500 may generate the statistical weight $v_i$ in the following manner. The statistical weight generation unit 500 executes threshold processing using a predetermined threshold with respect to the variance data $v^1_i$. The statistical weight generation unit 500 replaces each value, of the variance data $v^1_i$, which exceeds a predetermined threshold with the predetermined threshold by applying threshold processing to the variance data $v^1_i$. The predetermined threshold is, for example, a value between 1000 and 10000. The predetermined threshold can be changed, as needed, in accordance with the instruction issued by the operator via the input unit 1000.

The statistical weight generation unit 500 then applies a low-pass filter to the variance data $v^1_i$ having undergone the threshold processing. Applying the low-pass filter to the variance data $v^1_i$ having undergone the threshold processing will reduce noise corresponding to high-frequency components of the variance data $v^1_i$. In addition, the statistical weight generation unit 500 generates the statistical weight $v_i$ by applying a predetermined compressing function to the variance data $v^1_i$ filtered by the low-pass filter.

The reconstruction unit 700 reconstructs volume data by performing iterative reconstruction processing based on the projection data $r_i$ and the statistical weight $v_i$. More specifically, the reconstruction unit 700 executes iterative reconstruction, for example, in the following manner.

The reconstruction unit 700 executes the following processing concerning data fidelity in the data area shown in FIG. 6. The reconstruction unit 700 generates forward-projection data $p_i$ by performing forward projection for initial volume data for each of a plurality of views. The reconstruction unit 700 calculates difference data $d_i$ by dividing the difference between the projection data $r_i$ and the forward-projection data $p_i$ by a statistical weight. For example, the reconstruction unit 700 calculates the difference data $d_i$ as $(r_i - p_i)/v_i$. The reconstruction unit 700 reconstructs back-projection data by performing back projection by using the difference data $d_i$ within the view angle range of 360° or 180° + fan angle. The reconstruction unit 700 generates new volume data by combining the initial volume data with the back-projection data (image updating).

The reconstruction unit 700 executes general regularization (normalization) with respect to the new volume data in the image area shown in FIG. 6. The reconstruction unit 700 determines whether the normalized new volume data has reached a stopping criterion for iterative based on a predetermined image quality or a predetermined repetition count. The stopping criterion indicates, for example, that the difference between the projection data $r_i$ and the forward-projection data $p_i$ reaches a predetermined value. In addition, the predetermined repetition count is, for example, an image updating count. If the normalized new volume data has not reached the stopping criterion for iterative or the predetermined repetition count, the reconstruction unit 700 repeats the above procedure for the normalized new volume data as initial volume data. If the normalized new volume data has reached the stopping criterion for iterative or the predetermined repetition count, the reconstruction unit 700 stops the processing associated with the iterative reconstruction and outputs the normalized new volume data to the storage unit 800.

The storage unit 800 stores the volume data reconstructed by the reconstruction unit 700, the projection data $r_i$, the count information $c_i$ (original data), the noise data, the variance data, the threshold function, the predetermined data range, the upper limit value, the lower limit value, the predetermined threshold, the compressing function, the stopping criterion, the predetermined repetition count, and the like. The storage unit 800 also stores various types of programs such as programs concerning the generation of variance data and a statistical weight, a program concerning threshold processing, and a program concerning iterative reconstruction processing. The storage unit 800 stores information such as the instructions input by the operator using the input unit 1000, image processing conditions, and imaging conditions. The storage unit 800 stores control programs for controlling the gantry 200 and the like to perform X-ray computed tomography.

The display unit 900 displays, for example, a medical image concerning volume data reconstructed by the reconstruction unit 700, an input screen for inputting scan conditions set for X-ray computed tomography and reconstruction conditions concerning reconstruction processing, and the like.

The input unit 1000 inputs, to the X-ray computed tomography apparatus 100, various types of instructions, commands, information, selections, and settings from the operator. The input various types of instructions, commands, information, selections, and settings are output to the control unit 1100 and the like. The input unit 1000 includes a trackball, switch buttons, mouse, a keyboard, and the like (none of which are shown) for setting a region of interest (ROI) and the like. The input unit 1000 detects the coordinates of a cursor displayed on the display screen, and outputs the detected coordinates to the control unit 1100. Note that the input unit 1000 may be a touch panel provided to cover the display screen. In this case, the input unit 1000 detects touched and designated coordinates by a coordinate reading principle such as an electromagnetic induction scheme, magnetostriction scheme, or a pressure-sensitive scheme, and outputs the detected coordinates to the control unit 1100.

The control unit 1100 functions as the main unit of the X-ray computed tomography apparatus 100. The control unit 1100 includes a CPU and a memory (neither of which is shown). The control unit 1100 controls the high voltage generation unit 107 for X-ray computed tomography for an object, other constituent elements, and the like based on control programs stored in a memory (not shown). More specifically, the control unit 1100 temporarily stores, in a memory (not shown), instructions and the like input by the operator and sent from the input unit 1000. The control unit 1100 controls the high voltage generation unit 107, other constituent elements, and the like based on information temporarily stored in the memory. The control unit 1100 reads out programs concerning the generation of variance data and a statistical weight, a program concerning threshold processing, a program concerning iterative reconstruction processing, and control programs for executing predetermined image generation/display processing and the like from the storage unit 800, loads the programs in its own memory, and executes computation, processing, and the like associated with various types of processes.

In addition, when the technical idea of the X-ray computed tomography apparatus 100 according to this embodiment is to be implemented by a medical image processing apparatus, for example, the apparatus includes the constituent elements included inside a broken line 1200 in the block diagram of FIG. 10.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the invention as defined by the appended claims.

**Claims**

1. An X-ray computed tomography apparatus (100) comprising:

   an X-ray generation unit (105) configured to generate X-rays;
   an X-ray detection unit (3) configured to detect X-rays generated from the X-ray generation unit (105) and transmitted through an object;
   a projection data generation unit (300) configured to generate projection data based on an output from the X-ray detection unit (3);
   a variance data generation unit (400) configured to generate variance data based on the projection data and noise data concerning predetermined noise;
   a statistical weight generation unit (500) configured to generate a statistical weight by compressing the variance data to a predetermined data range; and
   a reconstruction unit (700) configured to reconstruct volume data by iterative reconstruction processing based on the projection data and the statistical weight;
   wherein the variance data generation unit (400) is configured to:

   generate filtering data by performing predetermined filtering processing for original data on which the projection data is based, and generate the variance data by dividing a sum of the filtering data and the noise data by a square of the filtering data;

   **Characterised In That**:
   the statistical weight generation unit (500) is configured to compress the variance data to the data range by replacing a value, of the variance data, over an upper limit value of the data range with the upper limit value and replacing a value, of the variance data, below an lower limit value of the data range with the lower limit value.

2. The apparatus (100) according to claim 1, **characterized in that** the statistical weight generation unit (500) is configured to generate the statistical weight by applying a low-pass filter to the variance data and compressing an output from the low-pass filter by a predetermined compressing function.

3. The apparatus (100) according to claim 2, **characterized in that** the compressing function is a logarithmic function.

4. The apparatus (100) according to claim 2, **characterized in that** the compressing function is a square-root function.

5. The apparatus (100) according to claim 1, **characterized in that** the statistical weight generation unit (500) is configured to generate the statistical weight by applying threshold processing using a predetermined threshold to the variance data, applying a low-pass filter to an output obtained by the threshold processing, and compressing an output from the low-pass filter by using a predetermined compressing function.

6. The apparatus (100) according to claim 5, **characterized in that** the statistical weight generation unit (500) is configured to convert the variance data exceeding the threshold to the threshold by performing the threshold processing.

7. The apparatus (100) according to claim 1, **characterized in that** the projection data is count data indicating a photon count of the X-rays.

8. A medical image processing apparatus **characterized by** comprising:

   a storage unit (800) configured to store projection data generated based on X-rays transmitted through an object;
   a variance data generation unit (400) configured to generate variance data based on the projection data and noise data concerning predetermined noise;
   a statistical weight generation unit (500) configured to generate a statistical weight by compressing the variance data to a predetermined data range; and
   a reconstruction unit (700) configured to reconstruct volume data by iterative reconstruction processing based on the projection data and the statistical weight.

wherein the variance data generation unit (400) is configured to:

generate filtering data by performing predetermined filtering processing for original data on which the projection data is based, and generate the variance data by dividing a sum of the filtering data and the noise data by a square of the filtering data;

**Characterised In That**:

the statistical weight generation unit (500) is configured to compress the variance data to the data range by replacing a value, of the variance data, over an upper limit value of the data range with the upper limit value and replacing a value, of the variance data, below an lower limit value of the data range with the lower limit value.

9. A medical image processing method **characterized by** comprising:

generating projection data based on X-rays transmitted through an object;
generating variance data based on the projection data and noise data concerning predetermined noise;
generating a statistical weight by compressing the variance data to a predetermined data range; and
reconstructing volume data by iterative reconstruction processing based on the projection data and the statistical weight;
wherein the variance data is generated by:

generating filtering data by performing predetermined filtering processing for original data on which the projection data is based, and
generating the variance data by dividing a sum of the filtering data and the noise data by a square of the filtering data;

**Characterised By**:

the statistical weight being generated by compressing the variance data to the data range by replacing a value, of the variance data, over an upper limit value of the data range with the upper limit value and replacing a value, of the variance data, below an lower limit value of the data range with the lower limit value.

**Patentansprüche**

1. Röntgencomputertomographie-Vorrichtung (100), die Folgendes umfasst:

eine Röntgenstrahlen-Erzeugungseinheit (105), die dafür konfiguriert ist, Röntgenstrahlen zu erzeugen,
eine Röntgenstrahlen-Erfassungseinheit (3), die dafür konfiguriert ist, Röntgenstrahlen zu erfassen, die von der Röntgenstrahlen-Erzeugungseinheit (105) erzeugt und durch ein Objekt durchgelassen werden,
eine Projektionsdaten-Erzeugungseinheit (300), die dafür konfiguriert ist, Projektionsdaten auf Grundlage einer Ausgabe von der Röntgenstrahlen-Erfassungseinheit (3) zu erzeugen,
eine Varianzdaten-Erzeugungseinheit (400), die dafür konfiguriert ist, Varianzdaten auf Grundlage der Projektionsdaten und Rauschdaten bezüglich eines vorbestimmten Rauschens zu erzeugen,
eine statistische Gewichtserzeugungseinheit (500), die dafür konfiguriert ist, ein statistisches Gewicht durch Komprimieren der Varianzdaten auf einen vorbestimmten Datenbereich zu erzeugen, und
eine Rekonstruktionseinheit (700), die dafür konfiguriert ist, Volumendaten durch iterative Rekonstruktionsverarbeitung auf Grundlage der Projektionsdaten und des statistischen Gewichts zu rekonstruieren,
wobei die Varianzdaten-Erzeugungseinheit (400) zu Folgendem konfiguriert ist:

Filterungsdaten durch Ausführen einer vorbestimmten Filterungsverarbeitung auf ursprüngliche Daten, auf denen die Projektionsdaten beruhen, zu erzeugen und
die Varianzdaten durch Dividieren einer Summe der Filterungsdaten und der Rauschdaten durch ein Quadrat der Filterungsdaten zu erzeugen,

**dadurch gekennzeichnet, dass**:

die statistische Gewichtserzeugungseinheit (500) dafür konfiguriert ist, die Varianzdaten durch Ersetzen eines Wertes der Varianzdaten über einem oberen Grenzwert des Datenbereichs durch den oberen Grenzwert und Ersetzen eines Wertes der Varianzdaten unter einem unteren Grenzwert des Datenbereichs durch den unteren Grenzwert auf einen vorbestimmten Datenbereich zu komprimieren.

2. Vorrichtung (100) nach Anspruch 1, **dadurch gekennzeichnet, dass** die statistische Gewichtserzeugungseinheit (500) dafür konfiguriert ist, das statistische Gewicht durch Anwenden eines Tiefpassfilters auf die Varianzdaten und Komprimieren der Ausgabe aus dem Tiefpassfilter mit einer vorbestimmten Kompressionsfunktion zu erzeugen.

3. Vorrichtung (100) nach Anspruch 2, **dadurch gekennzeichnet, dass** die Kompressionsfunktion eine logarithmische Funktion ist.

4. Vorrichtung (100) nach Anspruch 2, **dadurch gekennzeichnet, dass** die Kompressionsfunktion eine Quadratwurzelfunktion ist.

5. Vorrichtung (100) nach Anspruch 1, **dadurch gekennzeichnet, dass** die statistische Gewichtserzeugungseinheit (500) dafür konfiguriert ist, das statistische Gewicht durch Anwenden einer Schwellenwertverarbeitung unter Verwendung eines vorbestimmten Schwellenwertes auf die Varianzdaten, Anwenden eines Tiefpassfilters auf eine durch die Schwellenwertverarbeitung erhaltene Ausgabe und Komprimieren einer Ausgabe aus dem Tiefpassfilter durch Verwenden einer vorbestimmten Kompressionsfunktion zu erzeugen.

6. Vorrichtung (100) nach Anspruch 5, **dadurch gekennzeichnet, dass** die statistische Gewichtserzeugungseinheit (500) dafür konfiguriert ist, die Varianzdaten, die den Schwellenwert überschreiten, durch Ausführen der Schwellenwertverarbeitung zu dem Schwellenwert umzuwandeln.

7. Vorrichtung (100) nach Anspruch 1, **dadurch gekennzeichnet, dass** die Projektionsdaten Zählerdaten sind, die eine Photonenzählung der Röntgenstrahlen angeben.

8. Medizinische Bildverarbeitungsvorrichtung, **dadurch gekennzeichnet, dass** sie Folgendes umfasst:

   eine Speichereinheit (800), die dafür konfiguriert ist, Projektionsdaten zu speichern, die auf Grundlage von Röntgenstrahlen erzeugt werden, die durch ein Objekt durchgelassen werden,
   eine Varianzdaten-Erzeugungseinheit (400), die dafür konfiguriert ist, Varianzdaten auf Grundlage der Projektionsdaten und Rauschdaten bezüglich eines vorbestimmten Rauschens zu erzeugen,
   eine statistische Gewichtserzeugungseinheit (500), die dafür konfiguriert ist, ein statistisches Gewicht durch Komprimieren der Varianzdaten auf einen vorbestimmten Datenbereich zu erzeugen, und
   eine Rekonstruktionseinheit (700), die dafür konfiguriert ist, Volumendaten durch iterative Rekonstruktionsverarbeitung auf Grundlage der Projektionsdaten und des statistischen Gewichts zu rekonstruieren,
   wobei die Varianzdaten-Erzeugungseinheit (400) zu Folgendem konfiguriert ist:

   Filterungsdaten durch Ausführen einer vorbestimmten Filterungsverarbeitung für ursprüngliche Daten, auf denen die Projektionsdaten beruhen, zu erzeugen und
   die Varianzdaten durch Dividieren einer Summe der Filterungsdaten und der Rauschdaten durch ein Quadrat der Filterungsdaten zu erzeugen,

   **dadurch gekennzeichnet, dass:**
   die statistische Gewichtserzeugungseinheit (500) dafür konfiguriert ist, die Varianzdaten durch Ersetzen eines Wertes der Varianzdaten über einem oberen Grenzwert des Datenbereichs durch den oberen Grenzwert und Ersetzen eines Wertes der Varianzdaten unter einem unteren Grenzwert des Datenbereichs durch den unteren Grenzwert auf den Datenbereich zu komprimieren.

9. Medizinisches Bildverarbeitungsverfahren, **dadurch gekennzeichnet, dass** es Folgendes umfasst:

   Erzeugen von Projektionsdaten auf Grundlage von Röntgenstrahlen, die durch ein Objekt durchgelassen werden,
   Erzeugen von Varianzdaten auf Grundlage der Projektionsdaten und Rauschdaten bezüglich eines vorbestimmten Rauschens,
   Erzeugen eines statistischen Gewichts durch Komprimieren der Varianzdaten auf einen vorbestimmten Datenbereich und
   Rekonstruieren von Volumendaten durch iterative Rekonstruktionsverarbeitung auf Grundlage der Projektionsdaten und des statistischen Gewichts,
   wobei die Varianzdaten durch Folgendes erzeugt werden:

   Erzeugen von Filterungsdaten durch Ausführen einer vorbestimmten Filterungsverarbeitung für ursprüngliche Daten, auf denen die Projektionsdaten beruhen, und
   Erzeugen der Varianzdaten durch Dividieren einer Summe der Filterungsdaten und der Rauschdaten durch ein Quadrat der Filterungsdaten,

   **dadurch gekennzeichnet, dass:**
   das statistische Gewicht durch Komprimieren der Varianzdaten auf den Datenbereich durch Ersetzen eines Wertes der Varianzdaten über einem oberen Grenzwert des Datenbereichs durch den oberen Grenzwert und Ersetzen eines Wertes der Varianzdaten unter einem unteren Grenzwert des Datenbereichs durch den unteren Grenzwert erzeugt wird.

## Revendications

**1.** Appareil de tomodensitométrie à rayons X (100), comprenant :

une unité de génération de rayons X (105) configurée pour générer des rayons X ;
une unité de détection des rayons X (3) configurée pour détecter les rayons X générés par l'unité de génération de rayons X (105) et transmis à travers un objet ;
une unité de génération de données de projection (300) configurée pour générer des données de projection sur la base d'une sortie de l'unité de détection des rayons X (3) ;
une unité de génération de données de variance (400) configurée pour générer des données de variance sur la base des données de projection et de données de bruit concernant un bruit prédéterminé ;
une unité de génération de poids statistique (500) configurée pour générer un poids statistique en comprimant les données de variance dans une plage de données prédéterminée ; et
une unité de reconstruction (700) configurée pour reconstruire des données de volume par un traitement de reconstruction itératif sur la base des données de projection et du poids statistique ;
dans lequel l'unité de génération des données de variance (400) est configurée pour :

générer des données de filtrage en exécutant un traitement de filtrage prédéterminé de données originales sur lesquelles sont basées les données de projection ; et
générer les données de variance en divisant une somme des données de filtrage et des données de bruit par un carré des données de filtrage ;

**caractérisé en ce que** :
l'unité de génération du poids statistique (500) est configurée pour comprimer les données de variance dans la plage de données en remplaçant une valeur de données de variance, supérieure à une valeur limite supérieure de la plage de données, par la valeur limite supérieure et en remplaçant une valeur des données de variance, inférieure à une valeur limite inférieure de la plage de données, par la valeur limite inférieure.

**2.** Appareil (100) selon la revendication 1, **caractérisé en ce que** l'unité de génération du poids statistique (500) est configurée pour générer le poids statistique en appliquant un filtre passe-bas aux données de variance et en comprimant une sortie du filtre passe-bas par une fonction de compression prédéterminée.

**3.** Appareil (100) selon la revendication 2, **caractérisé en ce que** la fonction de compression est une fonction logarithmique.

**4.** Appareil (100) selon la revendication 2, **caractérisé en ce que** la fonction de compression est une fonction de racine carrée.

**5.** Appareil (100) selon la revendication 1, **caractérisé en ce que** l'unité de génération du poids statistique (500) est configurée pour générer le poids statistique en appliquant un traitement de seuil, en utilisant un seuil prédéterminé, aux données de variance, en appliquant un filtre passe-bas à une sortie obtenue par le traitement de seuil, et en comprimant une sortie du filtre passe-bas en utilisant une fonction de compression prédéterminée.

**6.** Appareil (100) selon la revendication 5, **caractérisé en ce que** l'unité de génération du poids statistique (500) est configurée pour convertir les données de variance dépassant le seuil en valeur de seuil en exécutant le traitement de seuil.

**7.** Appareil (100) selon la revendication 1, **caractérisé en ce que** les données de projection sont des données de comptage indiquant un comptage de photons des rayons X.

**8.** Appareil de traitement d'images médicales, **caractérisé en ce qu'**il comprend :

une unité de stockage (800) configurée pour stocker des données de projection générées sur la base des rayons X transmis à travers un objet ;
une unité de génération de données de variance (400) configurée pour générer des données de variance sur la base des données de projection et de données de bruit concernant un bruit prédéterminé ;
une unité de génération du poids statistique (500) configurée pour générer un poids statistique en comprimant les données de variance dans une plage de données prédéterminée ; et
une unité de reconstruction (700) configurée pour reconstruire des données de volume par un traitement de reconstruction itératif sur la base des données de projection et du poids statistique ;
dans lequel l'unité de génération des données de variance (400) est configurée pour :

générer des données de filtrage en exécutant un traitement de filtrage prédéterminé pour des données originales sur lesquelles les données de projection sont basées ; et générer les données de variance en divisant une somme des données de filtrage et des données de bruit par un carré des données de filtrage ;

**caractérisé en ce que** :
l'unité de génération du poids statistique (500) est configurée pour comprimer les données de variance dans la plage de données en remplaçant une valeur des données de variance, supérieure à une valeur limite supérieure de la plage de données par la valeur limite supérieure et en remplaçant une valeur des données de variance, inférieure à une valeur limite inférieure de la plage de données, par la valeur limite inférieure.

9. Procédé de traitement d'images médicales, **caractérisé en ce qu'**il comprend les étapes ci-dessous :

génération de données de projection sur la base de rayons X transmis à travers un objet ;
génération de données de variance sur la base des données de projection et des données de bruit concernant un bruit prédéterminé ;
génération d'un poids statistique en comprimant les données de variance dans une plage de données prédéterminée ; et
reconstruction des données de volume par un traitement de reconstruction itératif sur la base des données de projection et du poids statistique ;
dans lequel les données de variance sont générées par les étapes ci-dessous :

génération de données de filtrage en exécutant un traitement de filtrage prédéterminé pour des données originales sur lesquelles les données de projection sont basées ; et
génération des données de variance en divisant une somme de données de filtrage et des données de bruit par un carré des données de filtrage ;

**caractérisé en ce que** :
le poids statistique est généré en comprimant les données de variance dans la plage de données en remplaçant une valeur des données de variance, supérieure à une valeur limite supérieure de la plage de données, par la valeur limite supérieure et en remplaçant une valeur des données de variance, inférieure à une valeur limite inférieure de la plage de données, par la valeur limite inférieure.

FIG. 1

F I G. 2A

F I G. 2B

F I G. 3

FIG. 4

```
        ┌─────────────┐
        │    Start    │
        └──────┬──────┘
               ▼
        ┌─────────────────┐
        │ Data acquisition│──501
        └────────┬────────┘
                 ▼
        ┌─────────────────┐
        │   Reprocessing  │──502
        └────────┬────────┘
                 ▼
          ╭───────────╮
          │           │
          │  Storage  │
          │           │
          ╰─────┬─────╯
                ▼
        ┌─────────────────┐
        │    Processing   │──503
        └────────┬────────┘
                 ▼
        ┌─────────────────┐
        │  Reconstruction │──504
        └────────┬────────┘
                 ▼
        ┌─────────────────┐
        │ Image processing│──505
        └────────┬────────┘
                 ▼
        ┌─────────────────┐
        │  Display image  │──506
        └────────┬────────┘
                 ▼
          ┌─────────────┐
          │     End     │
          └─────────────┘
```

F I G. 5

600

Generate projection data $r_i$ by executing calibration, correction, and logarithmic conversion for pure raw data and generate statistical weight $v_i$ by performing adaptive noise reduction using projection data

Pure raw data

$v_i$ and $r_i$

601

Generate correction data $d_i$ by correcting difference based on difference between projection data $r_i$ and forward projection data $p_i$ and statistical weight $v_i$ using noise model

602

Forward projection

Image estimation

$p_i$

604

Image updating

Volume of $d_i$

603

Back projection

$d_i$

No

Yes

Image is output

Data fidelity

Data area

Sufficiently good?

Regularization

Regularization

Image area

F I G. 6

EP 2 866 203 B1

FIG. 7

F I G. 8A

F I G. 8B

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHI et al.** Weighted Simultaneous Algebraic Reconstruction Technique. *11TH INTERNATIONAL MEETING ON FULLY 3D IMAGE RECONSTRUCTION IN RADIOLOGY AND NUCLEAR MEDICINE,* 11 July 2011, 160-162